# EUROPEAN PATENT APPLICATION

(11) **EP 4 738 571 A1**
(43) Date of publication of application: **06.05.2026**
(21) Application number: 25748985.6
(22) Date of filing: 23.01.2025
(51) Int. Cl.: H01M 50/242, H01M 50/24, H01M 50/249

(54) **BATTERY CASE, AND BATTERY PACK AND VEHICLE COMPRISING SAME**

(30) Priority: 31.01.2024 KR 20240014996
(71) Applicant: LG Energy Solution, Ltd., Seoul 07335 (KR)
(72) Inventor: KANG, Dahoon, Daejeon 34122 (KR)
(74) Representative: Plasseraud IP
(86) International application number: PCT/KR2025/001369
(87) International publication number: WO 2025/165081

(57) **Abstract**

A battery case according to the present invention comprises: a pack frame that forms an accommodation space for a plurality of battery cells; a case lead for covering the accommodation space; a gasket interposed between the pack frame and the case lead; and a bracket for covering at least a portion of edge of the case lead, wherein the bracket has a plurality of coupling parts coupled to the case lead by means of a fastening member, adjacent coupling parts of the plurality of coupling parts being spaced a predetermined distance apart from each other.

## Description

### Technical Field

The present disclosure relates to a battery case, a battery pack and a vehicle including the same.

### Background Art

As the demand for portable electronic devices such as laptops, video cameras, and portable cell phones has sharply increased, and the commercialization of robots and electronic vehicles is in full swing, research on high-performance rechargeable batteries capable of repetitive charging and discharging is ongoing.

Rechargeable batteries commercialized at present include a nickel-cadmium battery, a nickel-metal hydride battery, a nickel-zinc battery, and a lithium rechargeable battery, and among them, since a memory effect, referring to a phenomenon where chargeable capacity of a battery decreases when charging the battery before the battery is completely discharged, rarely occurs in a lithium rechargeable battery compared to a nickel-based rechargeable battery, a lithium rechargeable battery is spotlighted for having advantages of being free to charge and discharge, having a low self-discharge rate, and having high energy density.

Such a lithium rechargeable battery mainly uses lithium-based oxide and a carbon material as a positive electrode active material and a negative electrode active material, respectively. A lithium rechargeable battery is provided with an electrode assembly, where a positive electrode plate and a negative electrode plate respectively coated with the positive electrode and negative electrode active materials are disposed with a separator in between, and an external material, in other words, a battery case, sealing and storing the electrode assembly with electrolyte.

Generally, a lithium rechargeable battery may be classified, depending on a shape of an external material, as a can-shaped rechargeable battery, where an electrode assembly is built in a metal can, and a pouch-type rechargeable battery, where an electrode assembly is built in a pouch made of an aluminum laminate sheet.

Recently, rechargeable batteries are widely used not only for small devices such as a portable electronic device but also for medium and large devices such as an electric vehicle or an energy storage system (ESS) for driving or storing energy.

Such rechargeable batteries are electrically connected to each other and stored inside a module case together to compose a battery module, and the battery modules are electrically connected in a compact space to increase energy density to compose a battery pack.

A battery pack with high energy density may be vulnerable to accidents such as fire or explosion when structural stability of a battery case is low. Accordingly, the development of a battery case with high structural stability is necessary.

### Detailed Description of the Invention

### Technical Goals

The present disclosure is designed in consideration of the aforementioned problem and intended to provide a battery case with improved structural stability.

### Technical solutions

A battery pack according to an example embodiment of the present disclosure may include a pack frame configured to form an accommodating space for a plurality of battery cells, a case lid configured to cover the accommodating space, a gasket interposed between the pack frame and the case lid, and a bracket configured to cover at least a portion of an edge of the case lid. The bracket may be provided with a plurality of coupling parts coupled to the case lid by a fastening member. The plurality of coupling parts may have coupling parts adjacent to each other that are spaced apart by a predetermined interval.

The bracket may be provided with a bead part of which at least a portion facing the case lid protrudes toward the case lid to be configured to be in contact with the case lid.

The bead part may be disposed at a portion corresponding to a space between the coupling parts adjacent to each other.

The battery case may further include a plate-shaped reinforcing member interposed between the case lid and the gasket to correspond to an area between the coupling parts adjacent to each other.

The bracket may include a first portion configured to cover an upper portion of the case lid and a second portion configured to cover a boundary of the case lid and the gasket.

The second portion may be configured to cover a boundary of the gasket and the pack frame.

The pack frame may be provided with an extension part extended from a part forming the accommodating space and coupled to the case lid.

The gasket may be provided with a protruding part protruding toward at least one of the case lid and the pack frame.

A battery pack according to an example embodiment of the present disclosure may include the battery case according to the present disclosure.

A vehicle according to an example embodiment of the present disclosure may include the battery pack according to the present disclosure.

### Effects of the Invention

According to an aspect of the present disclosure, it is possible to improve structural stability of a battery case. By including a bracket provided with a plurality of coupling parts, it is possible to improve coupling stability of a case lid, a gasket, and a pack frame. In addition, by the bracket once more covering a part where the case lid, the gasket, and the pack frame are coupled, it is possible to prevent a coupling force from decreasing due to damage of the coupled part caused by an external physical factor.

According to another aspect of the present disclosure, it is possible to maintain a roughly uniform coupling force between the case lid and the bracket throughout an entire area. As the bracket and the case lid are directly coupled by a fastening member only at the plurality of coupling parts, coupling force may be relatively low compared to the coupling parts in other areas except the coupling parts. However, by being provided with a bead part, the bracket may ensure airtightness between the case lid and the gasket through the fastening member at the plurality of coupling parts and may ensure airtightness between the case lid and the gasket through the bead part at an area between the plurality of coupling parts. Accordingly, it is possible, when internal pressure of the battery case increases, to prevent gas from leaking at a space between the case lid and the gasket corresponding to an area between the plurality of coupling parts at a pressure lower than a designed venting pressure, allowing gas to be discharged at a targeted location through a venting device.

According to another aspect of the present disclosure, when the pack frame and the case lid are coupled, it is possible for the pack frame and the case lid to be coupled outside the accommodating part without a fastening member affecting the accommodating space or a battery module accommodated in the accommodating space.

### Brief Description of Drawings

FIG. 1 is a perspective view of a coupled battery case according to an example embodiment of the present disclosure.
FIG. 2 is an exploded perspective view of a battery case according to an example embodiment of the present disclosure.
FIG. 3 is a diagram illustrating a bracket included in a battery case according to an example embodiment of the present disclosure.
FIG. 4 is a diagram illustrating a coupling relation of a bracket and a fastening member according to an example embodiment of the present disclosure.
FIG. 5 is a diagram illustrating a coupling relation of a battery case according to an example embodiment of the present disclosure.
FIG. 6 is a diagram illustrating a bracket included in a battery case according to another example embodiment of the present disclosure.
FIG. 7 is a diagram illustrating a coupling relation of a bracket and a fastening member according to another example embodiment of the present disclosure.
FIG. 8 is a diagram illustrating a coupling relation of a battery case according to another example embodiment of the present disclosure.
FIG. 9 is a diagram illustrating a bracket and a reinforcing member included in a battery case according to another example embodiment of the present disclosure.
FIG. 10 is a diagram illustrating a coupling relation of a battery case according to another example embodiment of the present disclosure.
FIG. 11 is a diagram illustrating a pack frame included in a battery case according to an example embodiment of the present disclosure.
FIG. 12 is a diagram illustrating a gasket included in a battery case according to another example embodiment of the present disclosure.
FIG. 13 is a diagram illustrating a coupling relation of a battery case according to another example embodiment of the present disclosure.
FIG. 14 is a diagram illustrating a vehicle according to an example embodiment of the present disclosure.

### Mode for Carrying Out the Invention

Before a detailed description of the present disclosure, the terms or words used in this specification and the claims should not be construed as being limited to their general or lexical meanings, and based on the principle that the applicant may properly define the disclosure with a notion of terms in a way that best explains the disclosure, should be interpreted as meanings and notions corresponding to the technical idea of the present disclosure. Accordingly, the example embodiments described in this specification and the configurations shown in the drawings represent merely the most desired embodiments of the present disclosure and do not encompass the entire technical idea of the present disclosure. Therefore, at the point of the present application, the possibility of various equivalents and modified examples that may serve as replacements should be understood.

Identical reference numbers or signs described in each drawing appended to this specification may represent components or elements performing practically the same functions. For the convenience of explanation and understanding, different example embodiments may use the same reference numbers or signs for explanation. In other words, when a plurality of drawings illustrate a component having the same reference number, not all the plurality of drawings may indicate one example embodiment.

In the description below, a singular expression includes a plural expression unless clearly indicated otherwise in context. Terms such as "comprise or include" or "configure" should be understood as indicating the existence of a feature, number, step, operation, element, component, or combination thereof described in this specification, and the terms do not exclude in advance the existence or the possibility of one or more additional features, numbers, steps, operations, elements, components, or combinations thereof.

Furthermore, in the description below, expressions such as above, upper portion, below, lower portion, side surface, frontside, and backside are expressed based on directions shown in drawings, and when a direction of an object changes, the expressions may be expressed differently.

In addition, to distinguish one element from another, terms including ordinals such as "first" and "second" may be used in this specification and claims. Such ordinals are used to distinguish identical or similar elements from each other, and by using such ordinals, the terms should not be construed as having limited meanings. As an example, elements coupled to such ordinals should not be construed as having a limited order of use or order of arrangement by the numbers. As occasion demands, each ordinal may be replaced by each other to be used.

Hereinafter, example embodiments of the present disclosure are described in detail with reference to the accompanying drawings. However, the spirit of the present disclosure may not be limited to suggested example embodiments. For example, a person of ordinary skill in the art who understands the spirit of the present disclosure may suggest other example embodiments included within the scope of the spirit of the present disclosure through adding, modifying, or deleting elements, but it may be understood that such suggestions may be included within the scope of the spirit of the present disclosure. Forms, sizes, and the like of elements in the drawings may be exaggerated for clearer explanation.

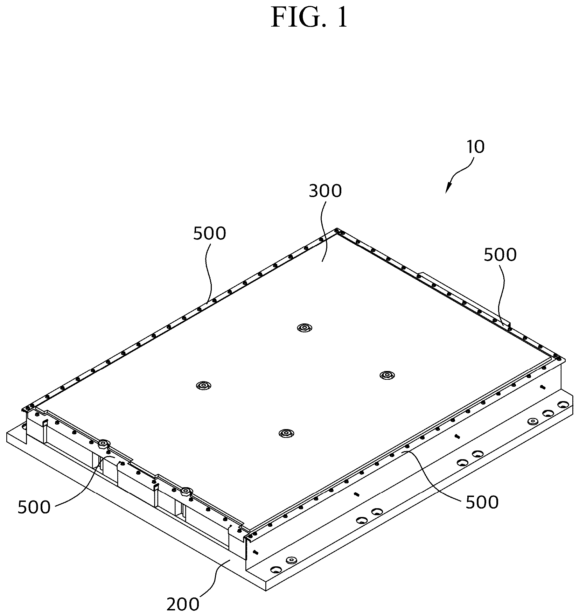

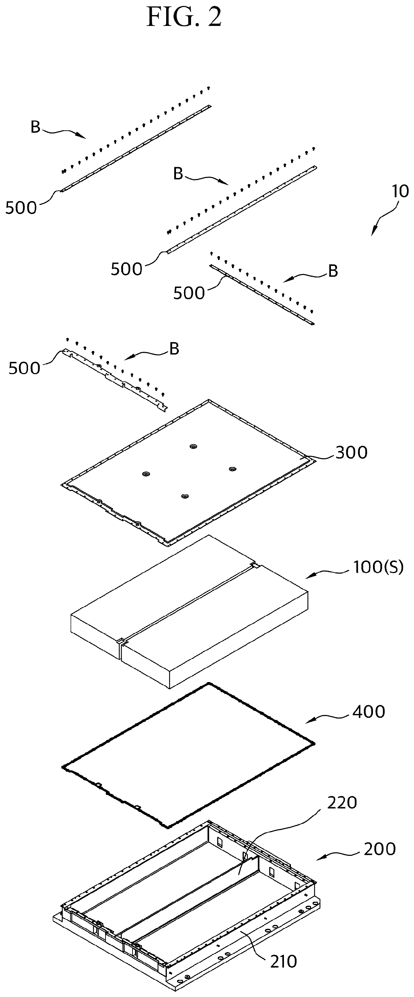

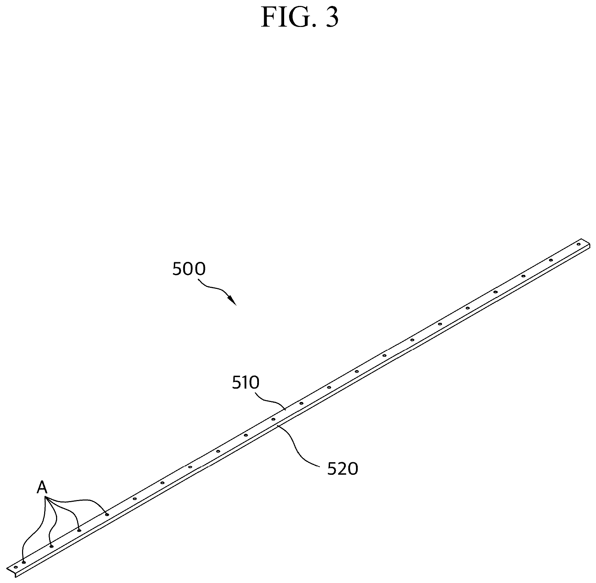

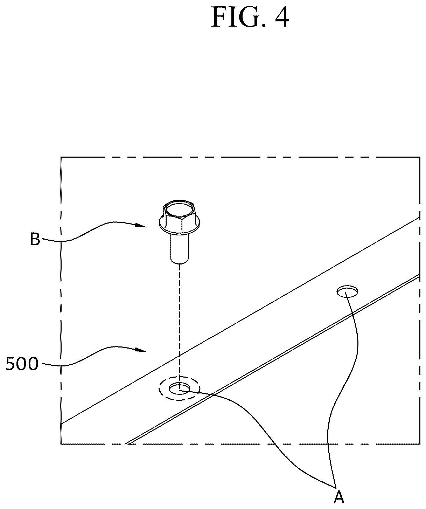

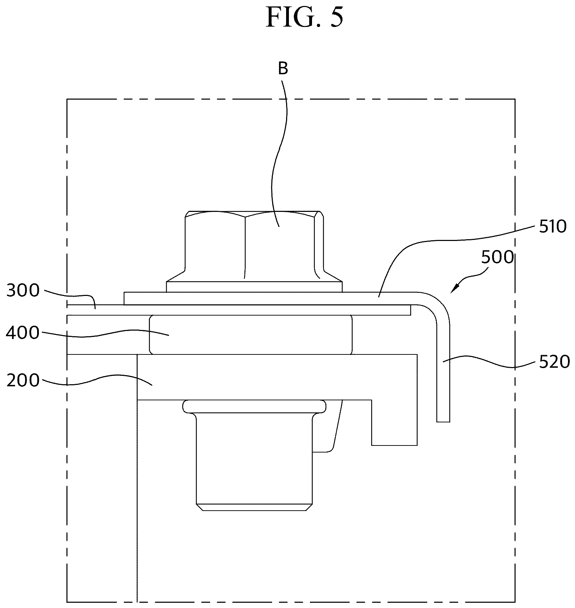

FIG. 1 is a perspective view of a coupled battery case 10 according to an example embodiment of the present disclosure. FIG. 2 is an exploded perspective view of the battery case 10 according to an example embodiment of the present disclosure. FIG. 3 is a diagram illustrating a bracket 500 included in the battery case 10 according to an example embodiment of the present disclosure. FIG. 4 is a diagram illustrating a coupling relation of the bracket 500 and a fastening member B according to an example embodiment of the present disclosure. FIG. 5 is a diagram illustrating a coupling relation of the battery case 10 according to an example embodiment of the present disclosure.

Referring to FIGS. 1 to 5, the battery case 10 may include a pack frame 200, a case lid 300, a gasket 400, and the bracket 500.

The pack frame 200 may be configured to form an accommodating space for a plurality of battery cells S. In the accommodating space, a battery module 100 including the plurality of battery cells S may be accommodated. For example, when the pack frame 200 accommodates a plurality of the battery modules 100, the pack frame 200 may be provided with a frame body 210 and a partition wall 220. The frame body 210 may be in a box shape with a top opened and may accommodate the plurality of the battery modules 100 inside. The partition wall 220 may divide an interior space of the frame body 210. The partition wall 220 may be provided in a space corresponding to a space between the plurality of the battery modules 100 adjacent to each other. Meanwhile, the pack frame 200 is not limited to the structure illustrated and described herein, and for example, the frame body 210 may be composed of a bottom plate, an end plate, a front plate, and a side plate.

The case lid 300 may be configured to cover the accommodating space. The case lid 300 may be in a cover shape covering a top open portion of a body of the pack frame 200.

The gasket 400 may be interposed between the pack frame 200 and the case lid 300. The gasket 400 may seal a space between the pack frame 200 and the case lid 300. The gasket 400 may be interposed along a perimeter of the pack frame 200 and the case lid 300.

The bracket 500 may cover at least a portion of an edge of the case lid 300. The bracket 500 may be provided with a plurality of coupling parts A coupled to the case lid 300 by the fastening member B. The fastening member B may be a screw.

The plurality of coupling parts A may have coupling parts A adjacent to each other that are spaced apart by a predetermined interval. The bracket 500 may bring the case lid 300 and the gasket 400 into close contact as being pressurized by the fastening member B. The coupling parts A may be an area directly pressurized by the fastening member when the fastening member B is coupled to the bracket 500. For example, when the fastening member B is a screw, the coupling parts A may be an area that is in contact with a bottom surface of a head of the screw.

The bracket 500 may include a first portion 510 and a second portion 520. The first portion 510 may cover an upper portion of the case lid 300. The first portion 510 may be provided with the plurality of coupling parts A. The first portion 510 may be coupled to the case lid 300 by the fastening member B. The second portion 520 may cover a boundary of the case lid 300 and the gasket 400. The second portion 520 may cover a boundary of the gasket 400 and the pack frame 200. The second portion 520 may cover the boundary of the case lid 300 and the gasket 400 and the boundary of the gasket 400 and the pack frame 200 on a side of the battery case 10. The second portion 520 may be extended from the first portion 510 and formed by being bent at about a 90-degree angle.

According to this configuration of the present disclosure, structural stability of the battery case 10 may be improved. By including the bracket 500 provided with the plurality of coupling parts A, coupling stability of the case lid 300, the gasket 400, and the pack frame 200 may be improved. In addition, the bracket 500 may once more cover a part where the case lid 300, the gasket 400, and the pack frame 200 are coupled, it is possible to prevent a coupling force from decreasing due to damage of the coupled part caused by an external physical factor.

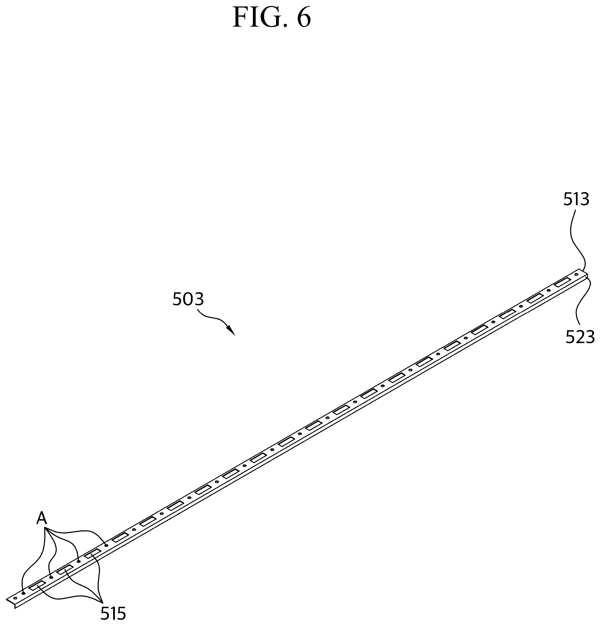

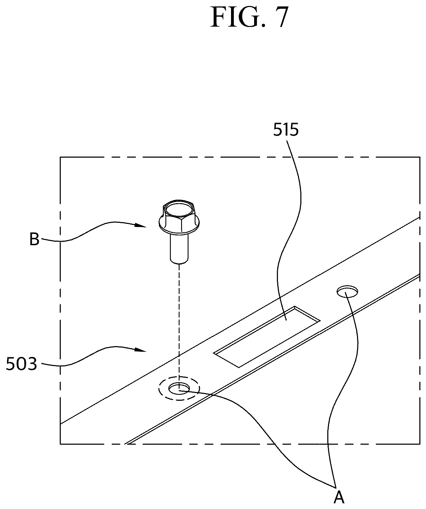

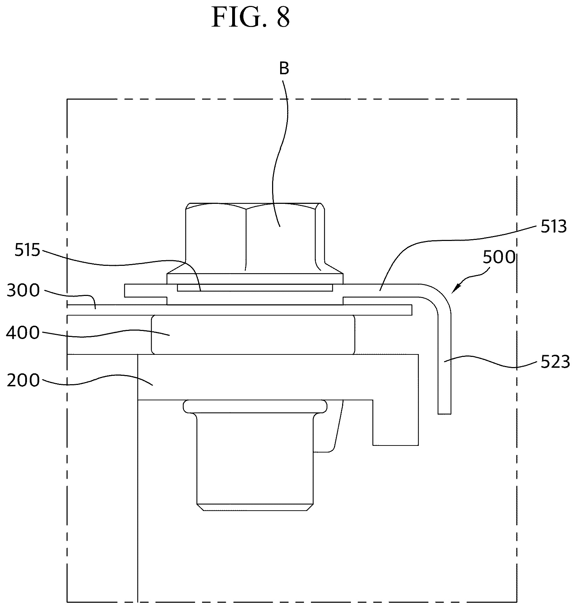

FIG. 6 is a diagram illustrating a bracket 503 included in the battery case 10 according to another example embodiment of the present disclosure. FIG. 7 is a diagram illustrating a coupling relation of the bracket 503 and the fastening member B according to another example embodiment of the present disclosure. FIG. 8 is a diagram illustrating a coupling relation of the battery case 10 according to another example embodiment of the present disclosure.

Referring to FIGS. 6 to 8, the bracket 503 may be provided with a bead part 515. The bracket 503 may include a first portion 513 and a second portion 523.

Description for the first portion 513 and the second portion 523 is replaced by the above description for the first portion 510 and the second portion 520.

At least a portion of the bead part 515 facing the case lid 300 may protrude toward the case lid 300. The bead part 515 may be configured to be in contact with the case lid 300. The bead part 515 may be disposed at a portion corresponding to a space between the coupling parts A adjacent to each other. The bead part 515 may be formed by pressing a top surface of the bracket 503 in a shape of the bead part 515 to protrude downward.

The thickness of the bead part 515 may be configured to allow the gasket 400 to be pressurized to an identical or similar extent in an area of the coupling parts A and an area of the bead part 515. In other words, when the bead part 515 is configured to be excessively thick, airtightness of the area of the coupling parts A may rather decrease, so a setup for an appropriate thickness is required.

As the thickness of the bead part 515 may be configured to be smaller than the thickness of the bracket 503, deformation of a structure of the bracket 503 may be minimized when coupled to the fastening member B. This is because, if the bead part 515 is excessively thick, the bracket 503 may bend by a pressurizing force when coupled to the fastening member B at a point of application where the bead part 515 and the case lid 300 are in contact, due to the lever principle.

A length of the bead part 515 along a longitudinal direction of the bracket 503 may be less than a value of subtracting a diameter of a head of the fastening member B from a length between the coupling parts A adjacent to each other. A length of the bead part 515 along a width direction of the bracket 503 may be less than the diameter of the head of the fastening member B. When the fastening member B is coupled through this structure of the bead part 515, the bead part 515 may be prevented from damage caused by the fastening member B. This is because, if the bead part 515 is excessively large, the fastening member B is in direct contact with the bead part 515 when the fastening member B is coupled and may deform a shape of the bead part 515, and a goal of the present disclosure where the bead part 515 reinforces and pressurizes only an area except the coupling parts A may not be achieved.

According to this configuration of the present disclosure, a coupling force between the case lid 300 and the bracket 503 may be maintained roughly uniform throughout an entire area. As the bracket 503 and the case lid 300 are directly coupled only at the plurality of coupling parts A by the fastening member B, other areas except the coupling parts A may have relatively low coupling force compared to the coupling parts A. However, by being provided with the bead part 515, the bracket 500 may ensure airtightness between the case lid 300 and the gasket 400 at the plurality of coupling parts A through the fastening member B and ensure airtightness between the case lid 300 and the gasket 400 at an area between the plurality of coupling parts A through the bead part 515. Accordingly, when internal pressure of the battery case 10 increases, gas leakage at a space between the case lid 300 and the gasket 400 corresponding to an area between the plurality of coupling parts A may be prevented at a pressure lower than a designed venting pressure, allowing gas to be discharged at a targeted location through a venting device.

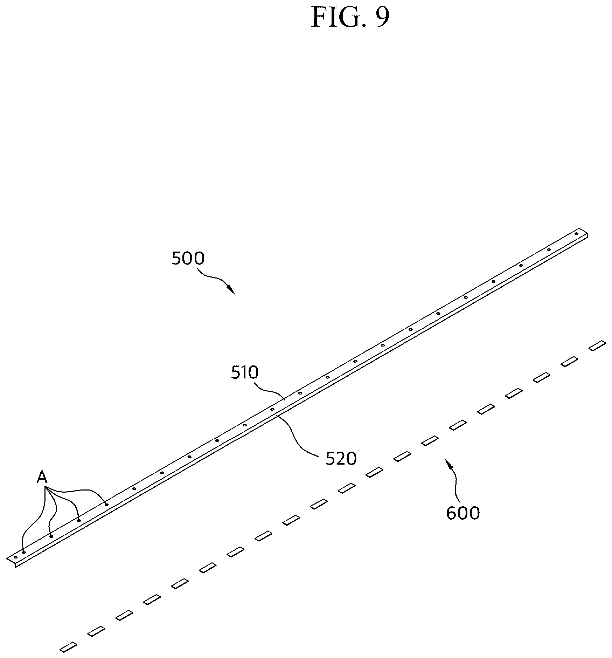

FIG. 9 is a diagram illustrating the bracket 500 and a reinforcing member 600 included in the battery case 10 according to another example embodiment of the present disclosure.

Referring to FIG. 9, the battery case 10 may further include the reinforcing member 600.

The reinforcing member 600 may be interposed between the case lid 300 and the gasket 400 corresponding to an area between the coupling parts A adjacent to each other. The reinforcing member 600 may be in a plate shape. The reinforcing member 600 may be an element corresponding to the bead part 515 described above. In other words, the bead part 515 may not be formed integrally with the bracket 500.

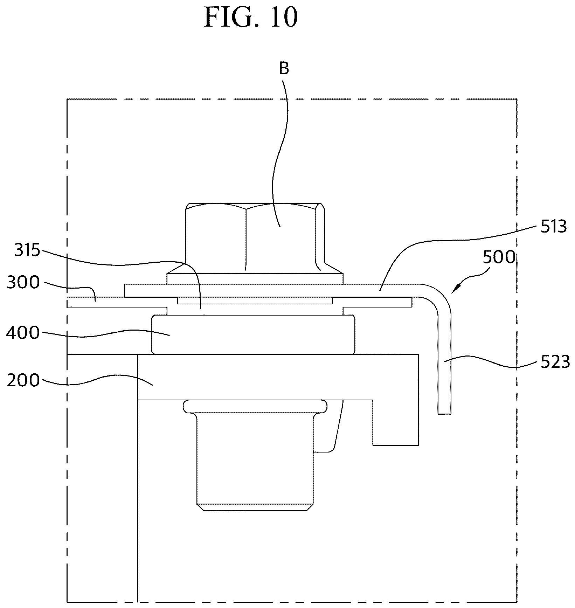

FIG. 10 is a diagram illustrating a coupling relation of the battery case 10 according to another example embodiment of the present disclosure.

Referring to FIG. 10, the bead part 515 may not be necessarily provided in the bracket 500. As described in FIG. 10, a bead part 315 may be formed in the case lid 300 not in the bracket 500, or the reinforcing member 600, not the bead part 315, may be interposed between the case lid 300 and the gasket 400.

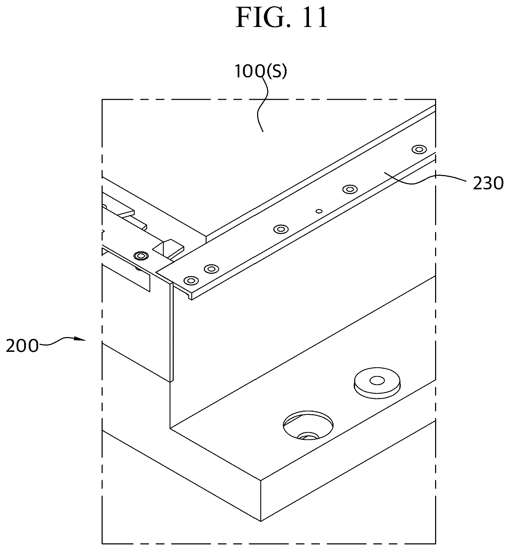

FIG. 11 is a diagram illustrating the pack frame 200 included in the battery case 10 according to an example embodiment of the present disclosure.

Referring to FIG. 11, the pack frame 200 may be provided with an extension part 230.

Referring to FIGS. 2, 5, and 11 together, the extension part 230 may be extended from a part forming an accommodating space and coupled to the case lid 300. The extension part 230 may be provided at a portion covering a side surface of the battery module 100 of the pack frame 200. According to this structure of the pack frame 200, when the pack frame 200 and the case lid 300 are coupled, the pack frame 200 and the case lid 300 may be coupled outside of the accommodating space without the fastening member B affecting the accommodating space or the battery module 100 accommodated in the accommodating space.

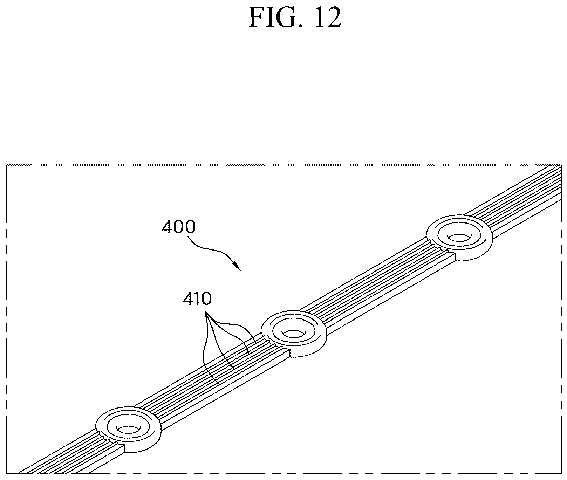

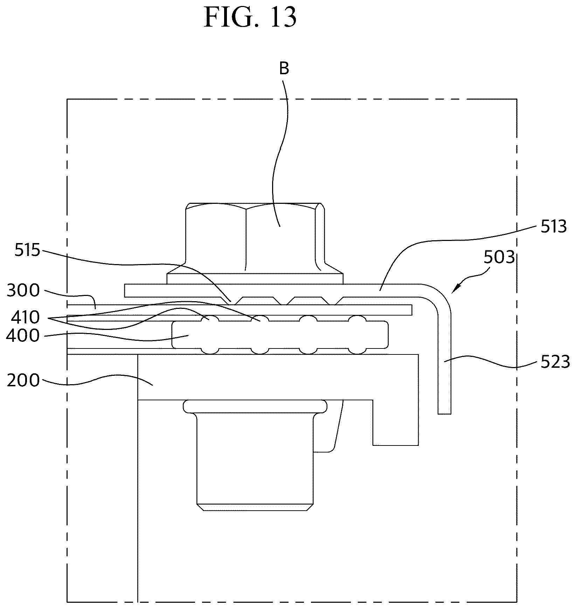

FIG. 12 is a diagram illustrating the gasket 400 included in the battery case 10 according to another example embodiment of the present disclosure. FIG. 13 is a diagram illustrating a coupling relation of the battery case 10 according to another example embodiment of the present disclosure.

Referring to FIGS. 12 and 13, the gasket 400 may be provided with a protruding part 410.

The protruding part 410 may protrude toward at least one of the case lid 300 and the pack frame 200. The protruding part 410 may be extended and formed along a perimeter of the case lid 300 and the pack frame 200. A plurality of the protruding parts 410 may be provided. The plurality of the protruding parts 410 may be disposed at an equal interval. According to this structure of the protruding part 410, airtightness may increase as each protruding part 410 may pressurize the perimeter of the case lid 300 in a continuous closed curve or pressurize the perimeter of the pack frame 200 in a continuous closed curve. Furthermore, as the plurality of the protruding parts 410 are provided, such airtightness may be further enhanced. In addition, when the gasket 400 is pressurized by coupling the fastening member B, enough pressure may be provided for pressurizing as the protruding part 410 is compressed in a state of being in contact with the case lid 300 and the pack frame 200 over a small area.

Referring to FIG. 13 again, the bead part 515 may be disposed at a portion corresponding to a space between the protruding parts 410 adjacent to each other. Through this structure of the bead part 515, an effect where the case lid 300 and the bracket 500 maintain a uniform coupling force throughout an entire area of the bracket 500 may be improved.

Referring to FIG. 2 again, a battery pack may include the battery case 10. Although the battery pack is not illustrated in the drawings, the battery pack may further include other various components in addition to the battery module 100 including a plurality of battery cells and the battery case 10, for example, a battery management system (BMS), a relay, and a current sensor, which are elements of the battery pack known at the time of application of the present disclosure.

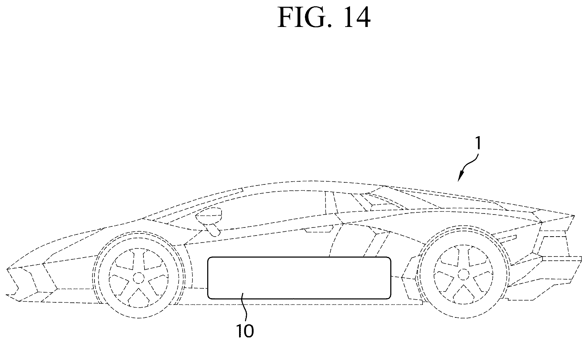

FIG. 14 is a diagram illustrating a vehicle 1 according to an example embodiment of the present disclosure.

Referring to FIG. 14, the vehicle 1 may include the battery pack. The vehicle 1 may further include other various elements included in the vehicle 1 in addition to the battery pack. For example, the vehicle 1 may further include a car body, a motor, or a control device such as an electronic control unit (ECU), in addition to the battery pack according to the present disclosure.

As described above, the present disclosure is mainly described desirable example embodiments referring to accompanying drawings, but it is obviously understood by those skilled in the art that various and clear multiple modifications included within the spirit and scope of the description are possible. Accordingly, the scope of the present disclosure should be construed by the appended claims described to include such multiple modifications.

### [Description of Symbols]

1 Vehicle
10 Battery case
100 Battery module
200 Pack frame
210 Frame body
220 Partition wall
230 Extension part
300 Case lid
400 Gasket
410 Protruding part
500, 503 Bracket
510, 513 First portion
315, 515 Bead part
520, 523 Second portion
600 Reinforcing member
A Coupling part
B Fastening member
S Battery cell

## Claims

1. A battery case comprising:
a pack frame configured to form an accommodating space for a plurality of battery cells;
a case lid configured to cover the accommodating space;
a gasket interposed between the pack frame and the case lid; and
a bracket configured to cover at least a portion of an edge of the case lid,
wherein the bracket is provided with a plurality of coupling parts coupled to the case lid by a fastening member, and
wherein the plurality of coupling parts have coupling parts adjacent to each other that are spaced apart by a predetermined interval.

2. The battery case of claim 1,
wherein the bracket is provided with
a bead part of which at least a portion facing the case lid protrudes toward the case lid to be configured to be in contact with the case lid.

3. The battery case of claim 2,
wherein the bead part
is disposed at a portion corresponding to a space between the coupling parts adjacent to each other.

4. The battery case of claim 1,
wherein the battery case further comprises
a plate-shaped reinforcing member interposed between the case lid and the gasket to correspond to an area between the coupling parts adjacent to each other.

5. The battery case of claim 1,
wherein the bracket includes
a first portion configured to cover an upper portion of the case lid and a second portion configured to cover a boundary of the case lid and the gasket.

6. The battery case of claim 5,
wherein the second portion
is configured to cover a boundary of the gasket and the pack frame.

7. The battery case of claim 1,
wherein the pack frame is provided with
an extension part extended from a part forming the accommodating space and coupled to the case lid.

8. The battery case of claim 1,
wherein the gasket is provided with
a protruding part protruding toward at least one of the case lid and the pack frame.

9. A battery pack comprising the battery case according to any one of claims 1 to 8.

10. A vehicle comprising the battery pack according to claim 9.
